# EUROPEAN PATENT APPLICATION

(11) **EP 1 424 123 A1**
(43) Date of publication of application: **02.06.2004**
(21) Application number: 02806710.6
(22) Date of filing: 09.08.2002
(51) Int. Cl.: B01D 65/08, B01D 63/16

(54) **FILTER DEVICE COMPRISING SEMI-PERMEABLE MEMBRANES**

(30) Priority: 17.08.2001 ES 200101917
(71) Applicant: Thomassen, Johannes Adrianus, 08007 Barcelona (ES)
(72) Inventor: Thomassen, Johannes Adrianus, 08007 Barcelona (ES)
(74) Representative: Isern Jara, Nuria
(86) International application number: PCT/ES2002/000398
(87) International publication number: WO 2003/078037

(57) **Abstract**

Filtration device for semi permeable membranes, being of the type constructed with an elongated tank that has a filtration membrane on the inside arranged longitudinally, in a tubular form or twisted into a spiral, in the body of the fluid flow between the feed inlet duct and the outlet of the waste extraction duct, characterised in that it includes two oscillating elements linked respectively between the feed inlet and the waste extraction outlet duct. On the inside, each oscillating element has a compression pre-chamber with a movable diaphragm arranged parallel to the liquid flow, both elements being operationally suitable to subject the liquid contained in the tank to repeated oscillating movements by the successive and alternating injection and extraction of a liquid mass movement. The object of said liquid movement is obtain a high tangential velocity of flow on the surface of the membrane and significant drag forces over the layer of concentrated waste and the crust build up of minerals. The drag forces subject the concentrated waste layer on the membrane to a steady movement towards the concentrated waste extraction duct. Both diaphragms are moved in an oscillating manner and phased by means of a double action cylinder linking the respective pressure pipes to the pre-chambers of the oscillating elements.

## Description

### OBJECT OF THE INVENTION

The object of the present invention is for the registration of a filtration device for semi permeable membranes that incorporates significant innovations and advantages compared to the present small calibre filtration devices such as micro-filtration, nano-filtration, ultra-filtration and inverse osmosis.

More specifically the new invention is made up of a tangential flow filtration device. In the device, the liquid to be filtered is subjected, during its circulation through the device, to the action of an oscillating displacement of the fluid mass by means of two opposing and complementary diaphragms or oscillating cylinders, for the purpose of increasing the tangential velocity of the liquid to be filtered locally on the membrane. This brings about greater turbulence and an increase of the drag forces that move the concentrated suspension layer or polarised layer for the evacuation from the device. This oscillating movement is produced by means of two diaphragms or pistons arranged at the two ends of the filtration device and coordinated by a double action hydraulic cylinder, in such a way that a very intense to and fro movement of the liquid to be filtered is produced in the device.

### BACKGROUND TO THE INVENTION

In industry there is a normal need to separate a substance in suspension or dissolved into the body of a liquid into two components, the pure liquid component or one having a very low concentration, and the component or phase in which the substance in suspension or dissolved in a very high concentration or practically pure state is obtained. Said filtration process is differentiated mainly by the size of the particle to be filtered. Amongst the available filtration processes, those that stand out are particle filtration or coarse filtration and fine filtration, and molecule filtration, such as micro-filtration, nano-filtration, ultra-filtration and inverse osmosis.

For example in industrial applications, micro filtration allows liquids to be separated in which there are substances in suspension with an approximate size of between 2 microns and 0.1 microns. In the case of inverse osmosis, the separation of ions or single molecules can even be carried out. The use of micro filtration and ultra filtration is very widely used in differing sectors such as the food industry to separate out impurities, the pharmaceutical industry as a process for the obtaining of concentrations of proteins or heavy molecules in dissolution, or in the filtering process for waste waters.

The filtration operation is generally carried out in a continuous process, in a circular, cylindrical or similar tank that has a semi permeable membrane on the inside. At one end, the tank has an inlet for the liquid to be filtered and at the other an outlet for the concentrated waste. In turn, the membrane present on the inside of the tank has an outlet pipe for the filtered liquid or purified discharge. The filter membrane is arranged along the flow of the liquid to be filtered in the tank and fitted in such a way as to maximise the surface that is in contact with the liquid to be filtered. One of the said arrangements to optimise the yield is arranged so that the membrane is rolled into a spiral and with the internal flow counter current.

The filtration in the range between micro filtration and inverse osmosis requires some specific and strict working conditions, amongst which it is necessary for both sides of the membrane to have a different pressure of approximately 1 bar or less pressure for micro filtration and up to 100 bar for inverse osmosis. During said process, the particles in suspension or dissolved gather on the membrane and temporarily blocking the pores of the membrane with a fine layer of the concentrated waste. The effect of this fine layer of waste that has adhered to the membrane is known as concentration polarisation. In an operation with a constant process, the polarisation concentration and the skim resulting from the accumulation of minerals has to be controlled and kept within acceptable limits. In order to do this it is necessary to remove this concentrated layer from the membrane or at least control its thickness. An operation that is effective for the removal of the concentrated particle layer is by tangential sweeping over the membrane. As the liquid flow between the filter feed inlet and the concentrated outlet runs tangentially over the membrane, if the velocity of the liquid is sufficiently high, the turbulences create some drag forces on said surface with the capacity to slowly drag the layer towards the discharge pipe of the concentrated waste. However, in a micro filtration process the liquid flow velocity over the membrane has to be high, approximately 4 to 7 metres/second. In the event of the velocity not being sufficiently high, the concentration of the waste on the membrane builds up and increasing the polarisation concentration, which makes the filtration process more difficult by covering and blocking the membrane. These velocities can be achieved by proceeding with two different techniques. The first technique consists of elevating the flow that is pumped into the filtering device with the consequent energy consumption and the over dimensioning of the filtration installation. A second technique consists of using tubular membranes that leave a small section for the passage of the liquid to be filtered. With the reduction of the said passage the flow velocity is increased on the inside of the tank with a moderate flow at the cost of increasing the pressure drop between the inlet feed conduction and the outlet conduction of the concentrate. The tangential velocities demanded by the filtration process boost the said pressure drop, moreover if a membrane rolled into a spiral is used, reaching to exceed the pressure difference between both sides of the membrane and thus making the filtration process impossible.

The VSEP (Vibratory Shear Enhanced Process) from the company New Logic is known and which increases the tangential velocity of the liquid to be filtered in the body of the flow. This is done by means of a rotating or oscillating movement of the membrane fitted onto a frame to support it, with which in addition to the velocity of the seam flow the increase of the tangential or crossed velocity has to be added that brings about said oscillatory movement, encouraging the movement of the layer of concentrated solute.

### DESCRIPTION OF THE INVENTION

The semi permeable membrane filtration device, object of the present invention, allows the filtration operation to be carried out by tangential flow in a continuous process with membranes, for example rolled into spirals, tubular or other shapes, at low pressure and reduced flow. Said device also allows a considerable saving in energy as the tangential velocity of the liquid flow over the membrane is carried out separately from the installation where the liquid to be filtered is circulating.

The principle on which the new invention is based consists of producing an increase of tangential velocity of a flow on the inside of the filter container by means of the sudden movement of the mass contained between two complementary membranes and with synchronised movement. In a conventional way, the tangential velocity on the inside of the tank where the micro filtration device is fitted depends on the inlet flow for the feed duct and the internal cross section. The new invention mechanism manages to achieve that the tangential velocity depends on a separate and auxiliary element for said conditions. Effectively, the tank in which the filtration is carried out and which, in a general way has an elongated construction, has oscillating diaphragms at both ends fitted into two chambers inserted into the flow of the liquid to be filtered and whose oscillating movement brings about a momentary intermittent forced increase of the velocity of said liquid mass. This momentary increase is greater than the velocity necessary for the drag forces to move the layer of solute or concentrated waste on the filtration membrane, achieving the desired effect of moving said layer towards the discharge pipe of the concentrated waste.

In a general manner, the device is made up of a conventional filtration tank, having a cylindrical, tubular or other shape, with the inlet for the liquid to be filtered and the outlet of the concentrated waste, arranged at both ends of the tank or in its vicinity. Inside the tank, there is a filtration membrane rolled into a spiral and arranged longitudinally, equally if the flow is parallel or contra current with the corresponding conduction for the extraction of the filtered liquid. There is an oscillating element for the movement of the liquid inserted respectively in between the inlet connection for the liquid to be filtered and the outlet of the concentrated waste. These oscillating movement elements are made up of a body with two chambers separated by a membrane. A main chamber in which there is the circulating flow and a pressure pre-chamber connected to an oscillating hydraulic system.

Effectively, both oscillating elements have respective diaphragms or moveable pistons and are coordinated in such a way that their movement is synchronised by amplitude and in phase. This means that when one diaphragm produces compression inside the oscillating element the other diaphragm creates a depression in the other oscillating element. The oscillating movement of both diaphragms brings about a movement of the flow on the inside of the tank, as at the time when a large amount of liquid is entering by one duct the same amount of liquid is exiting from the other. The entry and exit of the fluid at both ends of the tank produces a sudden movement of the liquid mass contained on the inside towards the discharge duct of the concentrated waste. The pressure increase produced on one side of the tank is cancelled out by the depression at the other end obtaining a pure movement of the liquid mass on the inside, without any appreciable pressure increase.

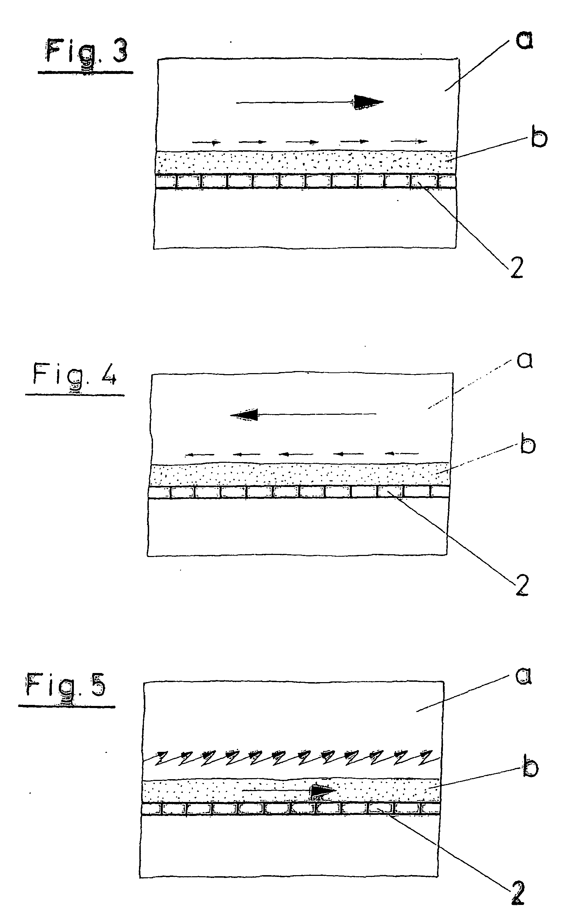

In the first phase, the movement wave is positive in the direction of the liquid flow seam between the entry of the liquid to be filtered and the exit of the concentrated waste (see figure 3). On being a very sudden movement (a) an elevated tangential velocity of the liquid is induced on the surface of the filtration membrane. This velocity is sufficiently high to produce turbulent currents upon the membrane surface. These currents exercise considerable drag forces on the layer (b) of waste particles deposited on the surface of the membrane, being the objective sought.

In the second phase (see figure 4), the diaphragms are moved inversely, bringing about a movement (a) against the fluid seam, creating the same effect on the surface of the membrane, preventing the turbulences from depositing the waste. As the continuous flow of the liquid to be filtered circulates on the inside of the filtration tank, the result is a net movement of the contents of the tank towards the exit.

These oscillations of the liquid mass (a) contained in the tank are carried out repeatedly (see figure 5), in such a way that an intermittent movement of the waste (b) that is deposited on the filter membrane advances from the liquid to be filtered entry inlet to the concentrated waste exit. Said movement does not produce a noticeable loss of the load on being separate from the general conditions of the overall entry and exit of the fluid to the filter.

With the new invention, the tangential velocity of the liquid to be filtered over the membrane does not depend on the liquid flow that enters from the entry duct, but from the movement of mass generated by the oscillating diaphragms. Thanks to this independence, the circulating pump of the liquid to be filtered is dimensioned in regard to the hydraulic conditions of the fluid seam, that is, the through flow or flow rate, viscosity, density and pressure of the pumping, reducing the incidence of load losses in the installation and not in accordance with the particular filtering conditions such as tangential filtration velocity, pressure drop between the feed inlet and the concentrated waste exit, maintaining the pressure differential in the membrane and others.

The result obtained is a device where the process is carried out from the micro filtration to inverse osmosis range with the necessary conditions, independently of the flow conditions of the liquid to be filtered. This process thus avoids the conditioning of the entire installation where said filtration device is found by the internal working conditions, except those variables that are constitution parameters.

In order to maintain the diaphragms in synchronised movement and in phase both diaphragms are connected with a double action oscillating hydraulic mechanism. This mechanism is made up of pressure container with a central plunger which divides it into two chambers. This plunger is driven by a motor and lineal movement gear assembly. The plunger brings about the exit of the hydraulic liquid in one chamber when travelling along its path and simultaneously the entrance of liquid under pressure into the other chamber. Each one of the chambers of the hydraulic mechanism is connected with one of the pressure pre-chambers of the oscillating elements by means of pipes, exercising its effect on two remote diaphragms, filling or emptying said pressure pre-chamber for the movement of the diaphragm. The conditions for the frequency of turn of the motor, or the reducer gear assembly, and the mass moved by the plunger in the hydraulic mechanism are determined by the drag conditions of the layer of waste deposited on the filter mechanism.

The filtration device is also applicable in a similar manner to the ultra filtration, nano-filtration and inverse osmosis. In all of these processes, the flow velocity is critical to achieve the removal of the polarisation layer and the crust build up of minerals deposited on the membrane and its value has to be separated from the internal pressure in the filtrate tank. In these cases the device of the new invention solves the polarisation layer problem and the deposits build up of minerals in an efficient manner, being applicable without problems. This is due to the fact that velocity necessary to bring about the drag on the polarisation layer and the crust build up of minerals is separate from the general liquid flow conditions. The device of the new invention determines said velocity in a completely independent manner.

In an alternative embodiment, the diaphragm can be incorporated into the inside of the filtration tank itself. If said tank is sufficiently long it can be made up into a compression pre-chamber at said end on installing the oscillating diaphragm on the inside and directly moving the mass of liquid contained.

In a second alternative embodiment, even the diaphragm can be substituted for a longitudinally moving plunger inside of the hydraulic cylinder device arranged at each end of the filtration tank, the choice mainly depending on the specifications for the dimensioning of the device.

In order to complement the description that has been made and for the purpose of making the characteristics of the invention easier to understand, attached to this present document is a set of drawings in which, by way of being illustrative but not limiting, the most significant details have been represented.

### BRIEF DESCRIPTION OF THE DRAWINGS

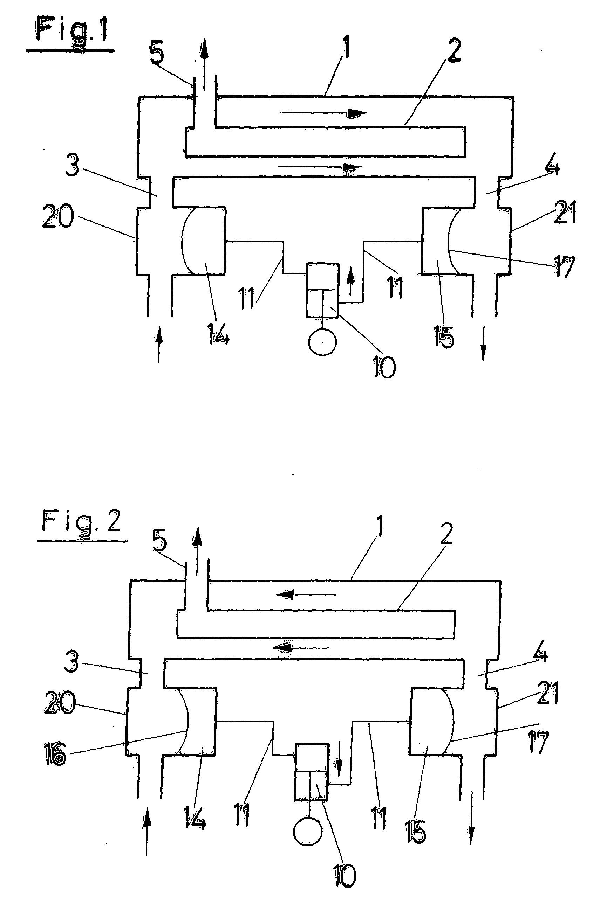

Figure 1. Shows a working diagram of the new invention device in the positive phase.
Figure 2. Shows a working diagram of the new invention device in the negative phase.
Figure 3. Shows a detail of the layer of concentrated waste on the membrane during the positive phase.
Figure 4. Shows a detail of the layer of concentrated waste on the membrane during the negative phase.
Figure 5. Shows a diagram of the continuous process combining the positive and negative phases represented in figures 3 and 4.

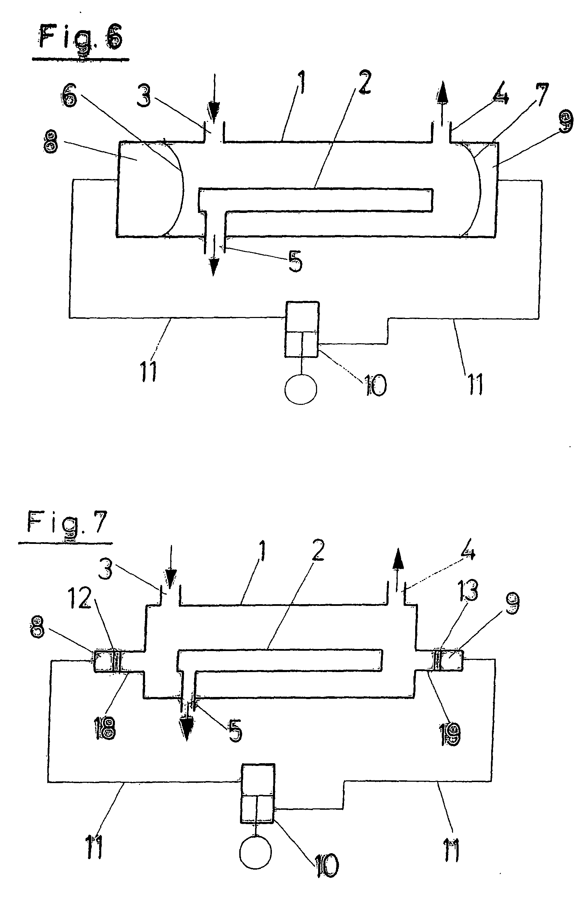

Figure 6. Shows a diagram of an alternative for the embodiment of the device.
Figure 7. Shows a diagram of an alternative for the embodiment of the device.

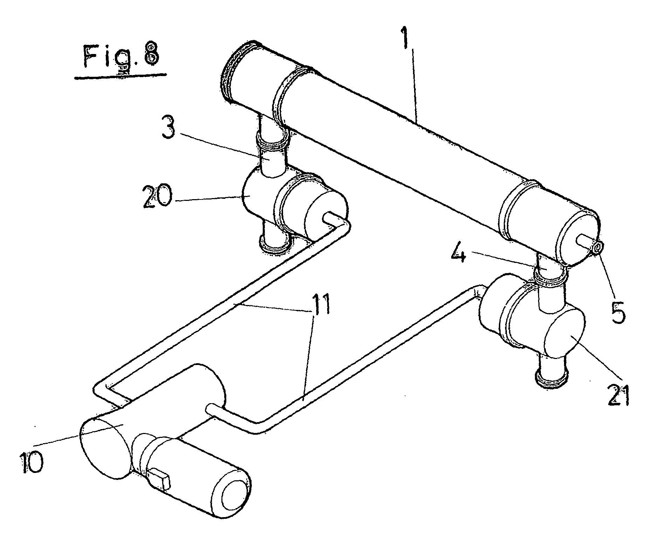

Figure 8. Shows a perspective view of the new embodiment of the device.

### DESCRIPTION OF A PREFERRED EMBODIMENT

In view of the figures commented on, and in accordance with the numbering adopted, a preferred embodiment of the invention can be seen in same that is not by way of limitation. These consist of a tank (1) or cylindrical or tubular shell which at its ends respectively has an inlet feed duct (3) and an outlet (4) duct for the extraction of the waste. On the inside of the tank (1) there is a micro filtration membrane (2) arranged along the length of the fluid seam between both ducts (3 and 4), by preference having a tubular shape or rolled into a spiral shape and having a discharge duct (5) for the filtered liquid. In a position place before the entry feed duct (3) for the liquid to be filtered adjacent and close there is an oscillating element (20) made up of a compression pre-chamber (14) with an oscillating diaphragm (16), said element (20) being linked to the stated flow of liquid to be filtered with the diaphragm (16) in a position parallel to same. In turn, in a position behind the waste extraction duct (4), adjacent and close there is a second oscillating element (21) linked to the flow of filtered liquid made up of an oscillating pre-chamber (15), said element (21) being linked to the flow of extraction with the diaphragm (17) in a position parallel to same. The compression pre-chamber (14) and the compression per-chamber (15) are connected, respectively, by means of corresponding pressure pipes (11) with an alternative double chamber cylinder (10), driven by an external motor.

In a second alternative embodiment the invention consists of a tank (1) or cylindrical or tubular shell which at its ends respectively has an inlet feed duct (3) and an outlet (4) duct for the extraction of the waste. On the inside of the tank (1) there is a micro filtration membrane (2) arranged along the length of the fluid seam between both ducts (3 and 4), by preference having a tubular shape or rolled into a spiral shape and having a discharge duct (5) for the filtered liquid. At the front end of the tank (1), regarding the flow seam, there is an oscillating diaphragm (6) that separates the inside of said tank (1) from a compression chamber (8). In turn, at the other end of the tank (1) there is a second oscillating diaphragm (7) that separates the inside of said tank (1) from an adjacent compression tank (9). Both compression chambers (8 and 9) are joined by means of respective pressure ducts (11) with a double chamber alternative cylinder (10), driven by an external motor.

In a third alternative embodiment, the invention consists of a tank (1) or cylindrical or tubular shell, which at its ends respectively has an inlet feed duct (3) and an outlet (4) duct for the extraction of the waste. On the inside of the tank (1) there is a micro filtration membrane (2) arranged along the length of the fluid seam between both ducts (3 and 4), by preference having a tubular shape or rolled into a spiral shape and having a discharge duct (5) for the filtered liquid. At the front end of the tank (1) there is an adjacent hydraulic cylinder (18) and coaxially with said tank (1), on the inside of said cylinder (18) there is a movable piston (12) separating the inside of said tank (1). In turn, at the opposite end of the tank (1) there is a second hydraulic cylinder (19) that is adjacent and coaxial with said tank (1), on the inside of the said cylinder (19) there is a movable piston (13) separating the inside of the stated tank (1). Both hydraulic cylinders (18 and 19) are joined by means of respective pressure ducts (11) with an alternative double chamber cylinder (10), driven by an external motor.

## Claims

1. Filtration device for semi permeable membranes, being of the type made up by a tank (1) or cylindrical or tubular shell which at its ends respectively has an inlet feed duct (3) and an outlet (4) duct for the extraction of the waste, on the inside of the tank (1) there is a micro filtration membrane (2) arranged along the length of the fluid seam between both ducts (3 and 4), and in turn having discharge duct (5) for the filtered liquid, **characterised in that** it is made up of an oscillating element (20) arranged so that it is linked to a feed duct (3) and close to the tank (1), on the inside of said oscillating element (20) there is a compression pre-chamber (14) for the movement of the oscillating diaphragm (16) parallel to the circulating flow by said duct (3); and **in that** it includes an oscillating element (21) arranged with a link to the extraction duct (4) of the liquid waste and close to the tank (1), on the inside of said oscillating element (21) there is a compression pre-chamber (15) for the movement of the oscillating diaphragm (17) parallel to the circulating flow by said duct (4); and **in that** it includes a double action alternative cylinder (10), driven by an external motor, connected by means of respective hydraulic pressure ducts (11) with each one of the pre-chambers (14) and the after-chamber (15) for the alternative movement and in phase of both diaphragms (16 and 17), both diaphragms (16 and 17) being suitable for its alternating in phase movement, subjecting the liquid contained inside of the tank (1) to sudden and high velocity movement, in an alternating manner by means of the alternate simultaneous introduction and extraction of liquid mass and without increasing the pressure.

2. Filtration device for semi permeable membranes, according to claim 1, **characterised in that** in an alternative embodiment the tank (1) includes an oscillating diaphragm (6) at the front of the fluid seam between the ducts (3 and 4) and before the filter membrane (2) and a second oscillating diaphragm (7) at the back of the fluid seam and, in turn, also behind the filter membrane (2), both diaphragms (6 and 7) being suitable for alternating in phase movement, subjecting the liquid contained inside of the tank (1) to sudden and high velocity movement, in an alternating and repeated manner; and because the diaphragm (6) is arranged between the inside of the tank (1) and a compression chamber (8) which is operationally suitable to force movement; and **in that** the second diaphragm (7) is arranged between the inside of the tank (1) and a pressure chamber (9) which is operationally suitable to force movement; and because it includes a double action alternating cylinder (10), driven by an external motor, connected by means of respective hydraulic pressure ducts (11) with each one of the pressure chambers (8 and 9) for the alternating movement and in phase with both diaphragms (6 and 7).

3. Filtration device for semi permeable membranes, according to claims 1 and 2, **characterised in that** in an alternative embodiment there is a hydraulic cylinder (18) arranged at the front end of the tank (1) in a manner that is co-axial with same and together with the inlet duct (3) for the liquid to be filtered; and **in that** it includes longitudinally movable piston (12) inside said hydraulic cylinder (18), in a coaxial direction to the fluid seam between the ducts (3 and 4); and because it includes a hydraulic cylinder (19) arranged at the rear end of the tank (1), in a manner that is co-axial and together with the concentrated waste extraction duct (4); and **in that** it includes a longitudinally movable piston (13) on the inside of said hydraulic cylinder (19), in a co-axial direction with the fluid seam between the ducts (3 and 4); and **in that** it includes an alternating double action cylinder (10), driven by an external motor, connected by means of respective hydraulic pressure ducts (11) to each one of the hydraulic cylinders (18 and 19) for the alternating and phased movement of both pistons (12 and 13).
